# EUROPÄISCHE PATENTSCHRIFT

(11) **EP 2 116 707 B1**
(45) Veröffentlichungstag und Bekanntmachung des Hinweises auf die Patenterteilung: **01.08.2018**
(21) Anmeldenummer: 09004435.5
(22) Anmeldetag: 27.03.2009
(51) Int. Cl.: F02D 41/06, F02D 41/00

(54) **Verfahren zum Kaltstartbetrieb eines Verbrennungsmotors**
Method for cold start of an internal combustion engine
Procédé de démarrage à froid d'un moteur à combustion interne

(30) Priorität: 17.04.2008 DE 102008019225
(43) Veröffentlichungstag der Anmeldung: 11.11.2009
(73) Patentinhaber: Audi AG, 85045 Ingolstadt (DE)
(72) Erfinder: Odendall, Bodo, 85101 Lenting (DE)
(74) Vertreter: Lehle, Josef

(56) Entgegenhaltungen:
- EP-A- 1 255 033
- WO-A-2004/029438
- FR-A- 2 731 473
- US-A1- 2003 000 509

## Beschreibung

Die Erfindung betrifft ein Verfahren zum Kaltstartbetrieb eines fremdgezündeten Verbrennungsmotors, bei dem zu mindestens einem Zeitpunkt vor einer Zündung ein gasförmiger Brennstoff eingespritzt wird und nachfolgend, jedoch ebenfalls noch vor der Zündung, zusätzlich ein Hilfskraftstoff eingespritzt wird, wobei als Verbrennungsmotor ein Gasmotor verwendet wird.

Verfahren zum Kaltstartbetrieb eines fremdgezündeten Gasmotors sind bekannt. Dabei wird üblicherweise der Motor zunächst mit einem Hilfskraftstoff betrieben, bis eine bestimmte Betriebstemperatur erreicht ist. Für den Betrieb des Verbrennungsmotors mit dem Hilfskraftstoff ist ein stöchiometrisches Hilfskraftstoff-Luft-Gemisch (λ ≈ 1) ideal. Dieses Mischungsverhältnis ist allerdings nicht vorsteuerbar, sondern muss während dem Betrieb eingeregelt werden. Um eine zuverlässige Zündung des Verbrennungsmotors sowie eine hohe Laufruhe zu erzielen wird daher meist ein fettes Hilfskraftstoff-Luft-Gemisch (λ ≈ 0,9) eingespritzt. Es wird also mehr Hilfskraftstoff eingebracht, als mit der verfügbaren Luftmenge verbrannt werden kann. Dies ist allerdings ungünstig, da bedingt durch das fette Gemisch vermehrt Schadstoffe erzeugt werden und die Abgasnachbehandlung erschwert wird, da unverbrannter Hilfskraftstoff mit dem Abgas ausgestoßen wird ist. Sobald der Verbrennungsmotor eine bestimmte Betriebstemperatur erreicht hat, kann vollständig auf Gasbetrieb umgeschaltet werden. Der Kaltstartbetrieb des Gasmotors mit dem Hilfskraftstoff ist insofern ungünstig, als dass zum Einen ein relativ großer Vorrat an Hilfskraftstoff mitgeführt werden muss und zum Anderen, dass während des Betriebs mit dem Hilfskraftstoff deutlich mehr Schadstoffe anfallen als während einem Betrieb mit Gas.

Aus dem Stand der Technik ist beispielsweise die US 2003/0000509 A1 bekannt, welche ein Startverfahren für eine für zwei Kraftstoffe ausgelegte Brennkraftmaschine beschreibt. Bei diesem Verfahren wird während eines Startvorgangs der Brennkraftmaschine neben einem gasförmigen Brennstoff eine bestimmte Menge eines Hilfskraftstoffs in Form von Benzin zugeführt.

Es ist nun Aufgabe der Erfindung, ein Verfahren zum Kaltstartbetrieb eines fremdgezündeten Verbrennungsmotors zu beschreiben, das einen verringerten Hilfskraftstoff-Verbrauch aufweist und den Schadstoffausstoß des Verbrennungsmotors reduziert.

Dies wird erfindungsgemäß dadurch erreicht, indem in den fremdgezündeten Verbrennungsmotor zu mindestens einem Zeitpunkt vor einer Zündung ein gasförmiger Brennstoff eingespritzt wird und nachfolgend, jedoch ebenfalls noch vor der Zündung, zusätzlich ein Hilfskraftstoff eingespritzt wird, wobei als Verbrennungsmotor ein Gasmotor verwendet wird. Somit liegt vor der Zündung ein Gas-Luft-Gemisch vor, das sehr mager sein kann und einen Brennraum ausfüllt. In einem zweiten Schritt wird ein Hilfskraftstoff eingespritzt, der eine Zündung des mageren Gas-Luft-Gemischs ermöglicht.

Dabei wird mittels der Einspritzung des Hilfskraftstoffs eine fette Schichtladung erzeugt. Um das magere Gas-Luft-Gemisch zünden zu können, muss zunächst an einer Stelle des Brennraums ein zündfähiges Gemisch geschaffen werden. Dies wird dadurch erreicht, dass eine Schichtladung aus dem Hilfskraftstoff erzeug wird. Durch die geringe Menge des eingespritzten Hilfskraftstoffs erfolgt eine vollständige Verbrennung des fetten Hilfskraftstoff-Luft-Gemischs, da der übrige Brennraum mit dem mageren Gas-Luft-Gemisch gefüllt ist und daher ausreichend Luft zur vollständigen Verbrennung des Hilfskraftstoffes vorhanden ist. Bei der Einspritzung des Hilfskraftstoffes ist es vorteilhaft, diesen möglichst fein zu verstäuben, da im Falle eines flüssigen Hilfskraftstoffes die eingebrachten Tropfen zunächst verdampfen müssen, wobei im Inneren des Tropfens ein äußerst fettes Gemisch vorliegt. Dies erhöht die Rußbildung des Verbrennungsmotors.

Eine Weiterbildung der Erfindung sieht vor, dass mittels der Einspritzung des gasförmigen Brennstoffes ein homogenes, mageres Gas-Luft-Gemisch erzeugt wird. Ein homogenes Gas-Luft-Gemisch, das den Brennraum gleichmäßig ausfüllt, ermöglicht eine sehr gleichmäßige Verbrennung und damit eine hohe Laufruhe. Durch die Verwendung eines mageren Gemischs wird der Schadstoffausstoß des Verbrennungsmotors reduziert.

Eine Weiterbildung der Erfindung sieht vor, dass die fette Schichtladung im Bereich einer die Zündung bewirkenden Zündkerze des Gasmotors erzeugt wird. Der erfindungsgemäße Gasmotor ist fremdgezündet. Im Gegensatz zu kompressionsgezündeten Verbrennungsmotoren wird daher ein Zündmechanismus benötigt, der die Verbrennung des Brennstoffes in Gang setzt. Die Einspritzung eines fetten Hilfskraftstoff-Luft-Gemisches in Form einer Schichtladung erfolgt vorteilhafterweise im Bereich der Zündkerze. Zum Zeitpunkt der Zündung liegt hier somit ein zündfähiges Hilfskraftstoff-Luft-Gemisch vor, während der übrige Brennraum mit einem mageren Brennstoff-Luft-Gemisch gefüllt ist, das in dieser Form nicht durch die Zündkerze zündfähig ist. Sobald die Zündkerze das Brennstoff-Luft-Gemisch der fetten Schichtladung entzündet hat, entzündet sich auch das magere Gemisch im Rest des Brennraums.

Eine Weiterbildung der Erfindung sieht vor, dass die Einspritzung des gasförmigen Brennstoffs in mindestens einen Zylinder des Gasmotors erfolgt. Das bedeutet, dass der Zylinder mindestens eine Vorrichtung aufweisen muss, durch die der gasförmige Brennstoff in den Zylinder eingebracht werden kann. Dieses Verfahren wird als Direkteinspritzung bezeichnet. Der Brennstoff wird zu einem bestimmten Zeitpunkt in den Zylinder eingebracht, wobei eine Vermischung mit Zylinderluft stattfindet. Diese Zylinderluft ist idealerweise Frischluft, die bereits vor der Einspritzung des gasförmigen Brennstoffs in den Zylinder eingebracht wurde. Zu diesem Zweck sind weitere Vorrichtungen an dem Zylinder vorgesehen.

Eine Weiterbildung der Erfindung sieht vor, dass die Einspritzung des gasförmigen Brennstoffs in mindestens ein Luftansaugrohr des Gasmotors erfolgt. Dieses Verfahren wird als Saugrohreinspritzung bezeichnet. Hierbei findet bereits während der Einbringung des Brennstoffs in den Zylinder eine Vermischung mit gleichzeitig eingebrachter Frischluft statt. Daraus resultiert eine sehr homogene Verteilung des Gas-Luft-Gemischs in der Brennkammer. Weiterhin kann durch geeignete Mittel eine Vorheizung des Brennstoff-Luftgemischs vorgesehen sein. Idealerweise sind Vorrichtungen vorgesehen, die den gasförmigen Brennstoff sowohl direkt in den Zylinder als auch in ein Luftansaugrohr des Gasmotors einbringen. Dies hat den Vorteil, dass mit der Einspritzung in das Luftansaugrohr des Gasmotors das magere, homogene Gas-Luft-Gemisch erzeugt und mit der Injektion direkt in den Zylinder für die punktuelle Einbringung einer fetten Schichtladung durchgeführt werden kann. Durch dieses Verfahren kann eine Partikelemission des Verbrennungsmotors verringert werden. Weiterhin erlaubt es einen Betrieb mit einem sehr spätem Zündwinkel. Dieser beschreibt die Stellung eines Kolbens in dem Zylinder, bei der eine Zündung durch die Zündkerze erfolgt.

Eine Weiterbildung der Erfindung sieht vor, dass die Einspritzung des gasförmigen Brennstoffs weit vor dem oberen Totpunkt mindestens eines Kolbens des Gasmotors erfolgt. Mit der Einspritzung des gasförmigen Brennstoffs soll ein möglichst homogenes, mageres Gas-Luft-Gemisch erzeugt werden. Um eine möglichst gleichmäßige Durchmischung des Brennstoffs mit der in dem Brennraum vorhandenen Luft zu ermöglichen, erfolgt die Einspritzung weit vor dem oberen Totpunkt, bei dessen Erreichen die Zündung des Brennstoff-Luftgemischs ausgelöst wird. Es ist anzumerken, dass eine Zündung auch kurz vor oder kurz nach Erreichen des oberen Totpunkts ausgelöst werden kann. Dieses Verfahren ermöglicht eine sehr gute Vermischung des eingespritzten Brennstoffs mit der Zylinderluft. Somit liegt ein äußerst homogenes Gas-Luft-Gemisch in dem gesamten oder zumindest einem großen Bereich des Brennraums vor.

Eine Weiterbildung der Erfindung sieht vor, dass die Einspritzung des Hilfskraftstoffs kurz vor oder im oberen Totpunkt des Kolbens erfolgt. Da eine Zündung des Brennstoff-Luft-Gemischs im Bereich des oberen Totpunkts des Kolbens erfolgt, wird durch eine Einspritzung des Hilfskraftstoffs kurz vor oder im oberen Totpunkt erreicht, dass sich dieser nicht oder nur kaum in dem Brennraum ausbreiten kann. Es findet also nur in geringem Ausmaß eine Vermischung des Hilfskraftstoffs mit der Zylinderluft und eine Ausbreitung des Hilfskraftstoff-Luft-Gemischs im Brennraum statt. Damit liegt in einem Bereich des Brennraums ein fettes Hilfskraftstoff-Luft-Gemisch vor, dessen Position über eine Anordnung der Einbringungsvorrichtung sowie der Einbringungsparameter (Druck, Strahlwinkel, Zerstäubungsgrad) beeinflusst werden kann. Idealerweise ist vorgesehen, dass mit dem Hilfskraftstoff eine fette Schichtladung erzeugt wird, die sich im Bereich der Zündkerze befindet.

Eine Weiterbildung der Erfindung sieht vor, dass als gasförmiger Brennstoff Flüssiggas (LPG, auch als Autogas bezeichnet) und/oder komprimiertes Erdgas (CNG) verwendet wird. Auch Flüssigerdgas (LNG) kann vorgesehen sein. Als Flüssiggas wird Propan und/oder Butan und/oder ein Gemisch, das zumindest teilweise Propan und/oder Butan enthält, bezeichnet.

Eine Weiterbildung der Erfindung sieht vor, dass als Hilfskraftstoff Benzin und/oder ein Gemisch, das zumindest teilweise Benzin enthält, verwendet wird. Als weiterer Gemischbestandteil werden beispielsweise Alkohole verwendet. Benzin-Alkohol-Gemische reduzieren den Kraftstoffverbrauch und den Schadstoffausstoß. Insbesondere werden Gemische wie E10 (10% Ethanolanteil) und E85 (85% Ethanolanteil) verwendet.

Eine Weiterbildung der Erfindung sieht vor, dass nach Beendigung des Kaltstartbetriebs, also in einem Warmbetrieb, der Gasmotor nur mit gasförmigem Brennstoff betrieben wird. Bei einem fremdgezündeten Gasmotor wird das Ziel verfolgt, möglichst wenig des Hilfskraftstoffes zu verwenden. Die bisherigen Ausführungen zeigen eine Reduzierung der benötigten Hilfskraftstoffmenge während des Kaltstartbetriebs, in dem der Hilfskraftstoff lediglich als Hilfsmittel zur Zündung eines Gas-Luft-Gemisches verwendet wird. Bei Erreichen des Warmbetriebs soll die benötigte Hilfskraftstoffmenge weiter reduziert werden. Dies wird dadurch erreicht, dass im Warmbetrieb die Hilfskraftstoff-Zufuhr unterbrochen wird. In diesem Betriebszustand erfolgt daher ein Betrieb ausschließlich mit gasförmigem Brennstoff.

Eine Weiterbildung der Erfindung sieht vor, dass bei dem Warmbetrieb ein Zeitpunkt zur Einspritzung gasförmigen Brennstoffs weit vor dem oberen Totpunkt und ein weiterer kurz vor oder im oberen Totpunkt liegt. Wie in den vorhergehenden Ausführungen beschrieben, wird an dem Zeitpunkt, der weit vor dem oberen Totpunkt liegt, gasförmiger Brennstoff derart in den Brennraum eingebracht, so dass ein homogenes, mageres Gas-Luft-Gemisch im Brennraum erzeugt wird. Zu einem späteren Zeitpunkt kurz vor oder im oberen Totpunkt erfolgt eine weitere Einbringung von gasförmigem Brennstoff. Vorzugsweise wird dabei eine fette Schichtladung, insbesondere im Bereich der Zündkerze des Gasmotors, erzeugt. Damit erfolgt auch im Warmbetrieb ein Betrieb in der Betriebsart "Homogen Split (HOSP)" (Doppeleinspritzung). Diese ist dadurch charakterisiert, dass ein homogenes, mageres Brennstoff-Luft-Gemisch in einem Großteil des Brennraums vorliegt, wobei das Gemisch alleine nicht zündfähig ist. Die Zündung erfolgt über eine fette Schichtladung, vorzugsweise im Bereich der Zündkerze des Gasmotors, die ein zündfähiges Brennstoff-Luft-Verhältnis aufweist.

## Patentansprüche

1. Verfahren zum Kaltstartbetrieb eines fremdgezündeten Verbrennungsmotors, bei dem zu mindestens einem Zeitpunkt vor einer Zündung ein gasförmiger Brennstoff eingespritzt wird und nachfolgend, jedoch ebenfalls noch vor der Zündung, zusätzlich ein Hilfskraftstoff eingespritzt wird, wobei als Verbrennungsmotor ein Gasmotor verwendet wird, **dadurch gekennzeichnet, dass** mittels der Einspritzung des Hilfskraftstoffs eine fette Schichtladung erzeugt wird.

2. Verfahren nach Anspruch 1, **dadurch gekennzeichnet, dass** mittels der Einspritzung des gasförmigen Brennstoffs ein homogenes, mageres Gas-Luft-Gemisch erzeugt wird.

3. Verfahren nach einem oder mehreren der vorhergehenden Ansprüche, **dadurch gekennzeichnet, dass** die fette Schichtladung im Bereich einer die Zündung bewirkenden Zündkerze des Gasmotors erzeugt wird.

4. Verfahren nach einem oder mehreren der vorhergehenden Ansprüche, **dadurch gekennzeichnet, dass** die Einspritzung des gasförmigen Brennstoffs in mindestens einen Zylinder des Gasmotors erfolgt.

5. Verfahren nach einem oder mehreren der vorhergehenden Ansprüche, **dadurch gekennzeichnet, dass** die Einspritzung des gasförmigen Brennstoffs in mindestens ein Luftansaugrohr des Gasmotors erfolgt.

6. Verfahren nach einem oder mehreren der vorhergehenden Ansprüche, **dadurch gekennzeichnet, dass** die Einspritzung des gasförmigen Brennstoffs weit vor dem oberen Totpunkt mindestens eines Kolbens des Gasmotors erfolgt.

7. Verfahren nach einem oder mehreren der vorhergehenden Ansprüche, **dadurch gekennzeichnet, dass** die Einspritzung des Hilfskraftstoffs kurz vor oder im oberen Totpunkt des Kolbens erfolgt.

8. Verfahren nach einem oder mehreren der vorhergehenden Ansprüche, **dadurch gekennzeichnet, dass** als gasförmiger Brennstoff Flüssiggas (LPG) und/oder komprimiertes Erdgas (CNG) verwendet wird.

9. Verfahren nach einem oder mehreren der vorhergehenden Ansprüche, **dadurch gekennzeichnet, dass** als Hilfskraftstoff Benzin und/oder ein Gemisch, das zumindest teilweise Benzin enthält, verwendet wird.

10. Verfahren nach einem oder mehreren der vorhergehenden Ansprüche, **dadurch gekennzeichnet, dass** nach Beendigung des Kaltstartbetriebs, also in einem Warmbetrieb, der Gasmotor nur mit gasförmigem Brennstoff betrieben wird.

11. Verfahren nach einem oder mehreren der vorhergehenden Ansprüche, **dadurch gekennzeichnet, dass** im Warmbetrieb ein Zeitpunkt zur Einspritzung gasförmigen Brennstoffs weit vor dem oberen Totpunkt und ein weiterer kurz vor oder im oberen Totpunkt liegt.

## Claims

1. Method for cold start of a spark-ignition internal combustion engine, in which at at least one point in time before an ignition a gaseous fuel is injected and subsequently, though likewise still before the ignition, additionally an auxiliary fuel is injected, wherein a gas engine is used as internal combustion engine, **characterised in that** a rich stratified charge is produced by injection of the auxiliary fuel.

2. Method according to claim 1, **characterised in that** a homogeneous, lean gas-air-mixture is produced by injection of the gaseous fuel.

3. Method according to one or more of the preceding claims, **characterised in that** the rich stratified charge is produced in the region of a spark plug of the gas engine that brings about the ignition.

4. Method according to one or more of the preceding claims, **characterised in that** the gaseous fuel is injected into at least one cylinder of the gas engine.

5. Method according to one or more of the preceding claims, **characterised in that** the gaseous fuel is injected into at least one air-intake tube of the gas engine.

6. Method according to one or more of the preceding claims, **characterised in that** the gaseous fuel is injected well before the upper dead centre of at least one piston of the gas engine.

7. Method according to one or more of the preceding claims, **characterised in that** the auxiliary fuel is injected shortly before or in the upper dead centre of the piston.

8. Method according to one or more of the preceding claims, **characterised in that** liquefied petroleum gas (LPG) and/or compressed natural gas (CNG) is used as gaseous fuel.

9. Method according to one or more of the preceding claims, **characterised in that** petrol and/or a mixture containing at least a proportion of petrol is used as auxiliary fuel.

10. Method according to one or more of the preceding claims, **characterised in that** after the completion of cold start operation, i.e. in a warm operation, the gas engine is operated only with gaseous fuel.

11. Method according to one or more of the preceding claims, **characterised in that** in warm operation one moment in time for the injection of gaseous fuel lies well before the upper dead centre and a further such moment lies shortly before or in the upper dead centre.

## Revendications

1. Procédé de démarrage à froid d'un moteur à combustion interne à allumage externe, pour lequel à au moins un moment avant un allumage un combustible gazeux est injecté et par la suite, toutefois aussi encore avant l'allumage, un carburant auxiliaire est en outre injecté, dans lequel un moteur à gaz est utilisé en tant que moteur à combustion interne, **caractérisé en ce qu'**une charge stratifiée grasse est générée au moyen de l'injection de carburant auxiliaire.

2. Procédé selon la revendication 1, **caractérisé en ce qu'**un mélange gaz-air maigre homogène est généré au moyen de l'injection du combustible gazeux.

3. Procédé selon l'une ou plusieurs quelconques des revendications précédentes, **caractérisé en ce que** la charge stratifiée grasse est générée dans la zone d'une bougie d'allumage provoquant l'allumage du moteur à gaz.

4. Procédé selon l'une ou plusieurs quelconques des revendications précédentes, **caractérisé en ce que** l'injection du combustible gazeux est effectuée dans au moins un cylindre du moteur à gaz.

5. Procédé selon l'une ou plusieurs quelconques des revendications précédentes, **caractérisé en ce que** l'injection du combustible gazeux est effectuée dans au moins un tube d'aspiration d'air du moteur à gaz.

6. Procédé selon l'une ou plusieurs quelconques des revendications précédentes, **caractérisé en ce que** l'injection du combustible gazeux est effectuée loin avant le point mort haut au moins d'un piston du moteur à gaz.

7. Procédé selon l'une ou plusieurs quelconques des revendications précédentes, **caractérisé en ce que** l'injection du carburant auxiliaire est effectuée peu avant ou dans le point mort haut du piston.

8. Procédé selon l'une ou plusieurs quelconques des revendications précédentes, **caractérisé en ce que** du gaz liquide (GPL) et/ou du gaz naturel comprimé (GNC) est utilisé en tant que combustible gazeux.

9. Procédé selon l'une ou plusieurs quelconques des revendications précédentes, **caractérisé en ce que** de l'essence et/ou un mélange qui contient au moins de l'essence, est utilisé en tant que carburant auxiliaire.

10. Procédé selon l'une ou plusieurs quelconques des revendications précédentes, **caractérisé en ce qu'**à la fin du démarrage à froid, dans un fonctionnement à chaud également, le moteur à gaz fonctionne seulement avec du combustible gazeux.

11. Procédé selon l'une ou plusieurs quelconques des revendications précédentes, **caractérisé en ce que** dans le fonctionnement à chaud, un moment pour l'injection de carburant gazeux se trouve loin avant le point mort haut et un autre peu avant ou dans le point mort haut.
